# EUROPEAN PATENT APPLICATION

(11) **EP 4 183 504 A1**
(43) Date of publication of application: **24.05.2023**
(21) Application number: 21208750.6
(22) Date of filing: 17.11.2021
(51) Int. Cl.: B22F 10/80, B22F 10/85, B22F 12/90, G06Q 50/04, H04L 9/00, B29C 64/00

(54) **COMPUTER-IMPLEMENTED METHOD OF PROVIDING STRUCTURED DATA OF AN ADDITIVE MANUFACTURING PROCESS**

(71) Applicant: Siemens Energy Global GmbH & Co. KG, 81739 München (DE)
(72) Inventor: GRAICHEN, Andreas, 60211 Norrköping (SE); SJÖHOLM, Jörgen, 60244 Norrköping (SE); ANDERSSON, Tommy, 61231 Finspong (SE); PIEGERT, Sebastian, 03222 Lübbenau (DE); JAHANGIR, Hamid, 52074 Aachen (DE)

(57) **Abstract**

A computer-implemented method of providing structured data (DS) of an additive manufacturing process is provided. The method comprising providing a first type of data (i) with coded information about a machine set up and/or about a prepared build job, providing a second type of data (ii) with coded information about a build area, providing a third type of data (iii) with coded information about a quality monitoring during the manufacturing process, the information from the first, the second and the third type of data being different from one another, and mapping the first, the second and the third type of data to a voxel field (Vn), wherein each voxel of the field, representing a three-dimensional portion of a 3D-model of the component (10) to be manufactured, is correlated to the first, the second and the third type of data in a coded way. Moreover, a related data structure product, an apparatus for providing the same as well as a communication apparatus and a respective additive manufacturing device are provided.

## Description

The present invention relates to a computer-implemented method of providing structured data or a related data structure product of an additive manufacturing, particularly a 3D-printing, process. Moreover, as a result of said method, a data structure product and a related apparatus for providing such product as well as a related communication apparatus and a respective additive manufacturing device are subject to the present invention.

A component to be manufactured may relate to any metallic, ceramic, or polymeric component such as component design that is predestined to be established additively by way of 3D-printing. Such AM (Additive Manufacturing) approaches comprise e.g. powder-bed-fusion methods, such as selective laser melting (SLM) or laser powder bed fusion (LPBF), selective laser sintering (SLS) and electron beam melting (EBM). Preferably, the component may pertain to a high-performance component, such as a component applied in the power generation, the aviation and/or the automotive industry.

A method of providing a dataset for additive manufacturing, particularly selective laser melting, is described in WO 2018/189301 A1, for example.

Additive manufacturing, particularly powder-bed methods have proven to be useful and advantageous in the fabrication of prototypes or complex components, such as components with filigree structure or functionally cooled components. Further, the additive manufacture stands out for its short chain of process steps which in turn enables material economization and a particularly low lead time.

Further additive manufacturing approaches relate to "Directed Energy Deposition (DED)", such as laser cladding, electron beam or plasma welding, metal inkjet molding (MIM), so-called sheet lamination methods, or even thermal spraying (VPS, LPPS) methods.

Related machine hardware or setups for powder-bed-fusion methods usually comprise a manufacturing or build platform on which the component is built layer-by-layer after the feeding of a layer of base material which may then be melted, e.g. by an energy beam, such as a laser, and subsequently solidified. The layer thickness is determined by a recoater that moves automatically, over the powder bed and removes excess material from a manufacturing plane or build space. Typical layer thicknesses amount to between 20 µm and 40 µm. During the manufacture, said energy beam scans over the surface and melts the powder on selected areas which may be predetermined by a CAD-file according to the geometry of the component to be manufactured. Said scanning or irradiation is preferably carried out in a computer-assisted way, such as Computer-Aided-Manufacturing (CAM) instructions, which may be present in the form of a dataset. Said dataset or CAM-file may be or refer to a computer program or computer program product.

It is well known that industrial additive manufacturing in the form of (laser) powder bed fusion is a comparatively young process which is still prone to flaws and imperfections during the 3D-build-up of e.g., metallic high-performance materials. The difficulty of a fully controllable and reproducible process is owed to the inherent complexity and nature of selective (welding) approaches implying a huge amount of locally applied energy and related thermal gradients in the powdery raw material. A skilled person in the field is aware of the consequence that the locally applied energy causes thermo-mechanical stress and vulnerability to structural defects in the as-deposited structure. This applies likewise for metallic and polymeric powder materials.

The only way to gain better insights in and controlling additive manufacturing is adequate process monitoring, such as by related sensor technology capable of detecting flaws and defects in the process and the established structure. Any progress in monitoring development, however, in turn poses challenges with regard to the effort of supervision - be it by a machinery or manually by AM machine operators. A particular issue here is management and evaluation of an abundance of data rendered during the process for quality control and certification of the process and the physical product.

Related hardware monitoring technology, usually records photos or thermographic pictures for everly layer of powdery material deposited and/or for every scanned structural layer. Usually, such pictures are taken by the commercially available devices. Considering the small number of layer thicknesses in the micrometer range, one can readily realise a number of thousands or tens of thousands of pictures and further collected sensor reading data during the process; meaning a huge data management challenge. These difficulties in turn increase the complexity to provide for an appropriate data handling, reporting or mastery of detected irregularities or flaws during the process which is stringently demanded in industrialized additive processes.

Assuming an ever-increasing relevance of AM in many industry sectors, it is striking that the outlined difficulties are often neither solved nor even tackled. Instead, reporting and related quality assurance and certification standards are often crude. By default, recording of these huge amounts of agglomerated (and only partly quality-relevant and/or structurally-critical) data is insufficient. This applies particularly to the quality observation in industrialized processes. In other words, nowadays, there is a striking lack of automatic means of handling the data in an expedient way. Likewise, this lack can hardly be corrected by manual workforce and related human subjective judgement and observation of quality issues during the process, as this is very time-consuming and expensive.

It is thus an object of the present invention to provide means that tackle and solve the above-mentioned problems. Particularly, the present invention provides for improved means of quality assurance in industrialised additive manufacturing and related certification of the required quality and conformity standards both for the process and for the as-manufactured physical product.

The mentioned object is achieved by the subject-matters of the independent claims. Advantageous embodiments are subject-matters of the dependent claims.

An aspect of the present invention relates to a computer-implemented method of providing structured data of an additive manufacturing or 3D-printing process.

The method comprises providing a first type of data with coded, such as preferably coded by characters or numerals, information about a machine or hardware setup and/or about a prepared build job. The term "build job" shall in this regard signify the entirety of process instructions according to which the additive manufacturing process shall be carried out by the machine to establish the related component. It is important to be realize that these preparatory steps may comprise many settings beyond those of preparing a mere CAD geometry or setting CAM numerical command for the printer.

The method further comprises providing second type of data with coded information or instructions about the build area, or build setup in a given build space of the related printing machine.

The method further comprises providing a third type of data with coded information about a quality monitoring during the manufacturing process, i.e., the executed print job.

The pieces or fractions of information from the first type of data, the second type of data and the third type of data are expediently different from one another.

The method further comprises mapping the first, the second and the third type of data to a voxel field, wherein each voxel of the field - representing a three-dimensional portion of a 3D-model of the component to be manufactured - is correlated to the first, the second and the third type of data in a coded way and/or secured way.

As an advantage, a data structure is provided which bears all relevant (quality-relevant) information and observations of a given additive manufacturing process and - at the same time - which can be made easily and securely accessible to other stakeholders or peers involved in the product life-cycle of the related component or manufacturing lot. Even more, the presented method and its data product may define a standard for "incident management" or quality monitoring in industrialised additive processes. Particularly, the introduction of the voxel field and its correlation to the different and parsed type of technical information is novel as it departs from the mere consideration of the layer thickness or related tomography data that can only be resolved, layerwise but not resolved by way of more accurate voxels i.e., volumetric pixels.

In an embodiment the first type of data comprises information about the type of the printing machine, its calibration, (monitoring) sensor settings, base material used and/or machine controls of or for the related build job.

In an embodiment the first type of data comprises information about a composition and/or a batch of the base material and irradiation parameters, like a beam power and a beam travel speed of the build job.

In an embodiment the second type of data comprises information about target layer properties of the component and a related irradiation pattern of the build job.

In an embodiment the third type of data is monitoring data recorded during the manufacturing process and comprising information about a severity score for assessing a severity of the detected incident and indicating such score when a predefined severity threshold is e.g. exceeded. The mentioned detection of incidents preferably relates to the monitoring and/or observation of a flaw or defect in the process detected by e.g. an (in-built) monitoring module of the related printing or manufacturing device.

The mentioned severity score and/or the mentioned threshold advantageously provides for an instrument of classifying the incident as "critical" for the process and/or the component substandard.

The skilled person particularly understands that the threshold may be calculated from a plurality of the introduced datatypes or even further constants which are available only when a particular build job is being prepared and executed. In this regard it would be unduly to provide for a more specific example of such score without unduly limiting the generality and validity of this disclosure to its detriment. It can, however, be assumed that a skilled person is readily enabled to define such severity parameters such as out of statistically derived parameters and boundary conditions, when a real build job is concerned.

The introduced subsets of data, i.e. the first type, the second type and the third type of data advantageously allow to parse the huge amounts of data rendered during the process in an expedient way and in a way to process them any further such as by way of the introduced mapping.

In an embodiment the severity or severity score and/or the mentioned threshold relates to a recoating flaw and/or a defect in the as-manufactured structure of the component.

In an embodiment only structure-critical voxels or voxel clusters, for instance those with a critically classified severity (above threshold), are permanently linked or mapped to the data structure, such as linked or secured in a way as will be described further below by way of the introduced apparatus and network. This advantageously allows to keep the provided data structure concise and practicality readable and editable.

In an embodiment, a remainder of non-structure-critical voxels is consequently discarded from the data structure or deleted or omitted respectively, such that a spatial map of voxels - per given layer to which the provided data are mapped - may be discontinuous or not covering the whole (layerwise) geometrical contour of the part.

In an embodiment, any or at least some voxel's vertical (Z-)extension, i.e. preferably its extension along a buildup direction, substantially corresponds to the layer thickness of new material layer which is respectively chosen for the build job. This advantageously allows to define an expedient lower limit for each voxel unit which can at the same time account for the required spatial resolution of defect incidents.

In an embodiment, the method is a method of generating a digital map, digital twin, companion or protocol of the build process, including all quality-relevant and/or structure-critical information of said process. To this effect, as already outlined above, the presented idea offers many technical advantages, i.e. the improvement of quality standards and reproducibility in industrialised additive processes as a whole, and a forum for joined learning and back-tracing of the procedural flaws and/or structural defects in the process which, in turn, enables for a better understanding of the complicated physical and chemical origin of these incidents.

A further aspect of the present invention relates to the data structure product per se, preferably as an intangible product comprising the structured data that is provided by the method as described.

In an embodiment, the data structure product is free of photographic data and free of complete contour data of the component, i.e. indicating a complete and continuous layerwise contour of said component.

A further aspect of the present invention relates to an apparatus for providing the described data structure product, wherein the apparatus comprises a module for establishing, i.e. preferably reading, filtering and composing, the first type of data, the second type of data and the third type of data, respectively, and a mapping module for correlating said types of data to the voxel field.

A further aspect of the present invention relates to a communication apparatus comprising a communication interface to a network application, such as a distributed peer-to-peer network or related database system, wherein the interface is configured to send to and receive information from the network, and wherein the communication interface is configured to read the structured information of the data structure product such that a measure for preventing or repairing such incident can be defined, and to extend the data structure with a fourth type of data, indicating such measure in the data structure product in a compatible secure and trustworthy manner, such as by the measures as described herein.

A still further aspect of the present invention relates to an additive manufacturing device, particularly a 3D-printer, comprising a monitoring module for detecting defects during an additive manufacturing process, and the communication apparatus and/or the apparatus for providing the data structure product, wherein the apparatus is further set up to communicate with the monitoring module to establish or provide the third type of data. Preferably, also the described second and third type of data - as described herein - can be established or provided by said apparatus.

The data structure product as referred to herein preferably relates to an intangible data format or product in a generic sense. To this effect, the data structure product demands for a new data structure or, in other words, a novel agglomeration of technical data. It is particularly emphasised that said data structure needs to be construed as a product of a related computer-implemented method of providing such structured data. The data structure (product) may thus constitute a functional result or subject of a related sorting, parsing or structuring program or algorithm.

The term "data structure product" and "structured data" may in this sense be utilised synonymously. Moreover, the data structure product may be or relate to a computer program product or vice versa, as the data structure manifests itself as a product of a computer implemented method.

A computer program product as referred to herein preferably also relates to an intangible product, i.e. a product produced by the execution of a computer program in the sense of the functional result of program or computer-implemented method. A computer program (product) may generally include applications, programs, program modules, source code, program code, object code, compiled code, interpreted code, machine code, or any executable instructions in general.

Additionally, said computer program product may relate to the mentioned intangible product together with a computer-readable storage medium, be it as volatile or non-volatile medium or record carrier, which retains the product. Such carrier may e.g. be a memory card, a USB stick, a flash memory, a CD-ROM, a DVD or a file downloaded or downloadable from a server, cloud and/or (distributed) network or computing environment. More particularly, said distributed network may relate to or be a networked client (e.g. a smartphone) a server system, e.g. accessing storage or processing resources of a computer cloud.

The inventive data structure and/or computer program (product) may thus be present and/or stored in a (wireless) peer-to-peer network or on a device accessing such a network and performing transactions with the network, such as performing file sharing, or editing of data in any way. E.g., such transactions may be performed even in an augmented reality environment with head mounted displays, interacting over a (wireless) ad hoc network or maintaining a distributed ledger using a blockchain.

Indeed, the mentioned data structure and/or computer program (product) itself does not directly relate to a technical effect in physical reality. Said product, however, inherits the related (further) technical effect when being run or executed or read by a computer and consequentially possesses the potential to produce said effect. Thus, also the product brings about a related technical effect and therefore possesses a technical character. This is because said product imparts said predetermined technical effect.

The term "computer-aided" or "computer-implemented" shall mean in the context of the present disclosure that a related method is implemented such that a processor executes at least one process step. In this context, it is further pointed out that the mentioned products - knowing that it retains already all necessary technical information necessary as to implement the inventive success of the present invention - is independently tradable and subject to commercial and business interactions.

In turn, the term "processor" may denote in this context a machine or an electronic circuit. Particularly, said processor may be or may relate to a central processing unit (CPU), an associated processor, a microprocessor or microcontroller, a digital signal processor (DSC), an application specific integrated circuit (ASIC), specifically a so-called field programmable gate array (FPGA) or to a graphic processing unit (CPU). Likewise, the processor may be or relate to a virtual processor, a virtual machine or soft CPU. Furthermore, a programmable processor is contemplated which is provided with a configuration of method steps of the present invention.

The term "computer" may signify in the context of the present invention e.g. a system of computers, a client, a smartphone, an appliance, server or the like which e.g., are set up in- or outside of the related (distributed) network comprising a plurality of such clients or computers. Thus, any computer may be or may not be part of the distributed network.

The term "providing" shall indicate in the present context that data is provided, supplied or prepared by editing, rendering, storing, loading or similar transactions.

Actually, a skilled person is aware of the fact that conventional as well as inventive variants of implementation of a given solution may be realised via hardware, software and/or even firmware. Specifics or components of a method or an apparatus may further be composed of hardware components, firmware and software components in order to realize a given solution. Particularly, this may be the case once a part of the inventive merits or solution is effectuated by specialized hardware, such as an ASIC or FPGA and another part of it may be effectuated by a processor, computer or storage-based software.

A nodal point or ledger of e.g. and blockchain or related distributed network may signify in the context of the present invention e.g. any appliance, processor, client, smart phone, a 3D-printer, a related additive manufacturing device or any related hub to be suitable to communicate with another of such ledger and/or to carry out transactions or operations in the underlying distributed network. Such nodal points may particularly execute transactions in the (blockchain) network, such as via additional members or blocks or introduce them.

A protected or secured node or ledger may be any such nodal point that is protected by a hash function or a related encryption functionality in the related (blockchain) network and/or an additional security measure, such as a firewall in order to prevent any manipulation and to maintain a trustworthy network and/or process flow. In general, the provided data structure per se may as well be structured or composed of the different types of data in a secured and trustworthy manner, such as by way of a blockchain or similar encryption means or hash functions.

Advantages and embodiments relating to the described method or the data structure product may as well pertain or be valid with regard to the apparatuses, and vice versa.

Further, features and advantageous embodiments become apparent from the following description of the exemplary embodiment in connection with the Figures.
Figure 1 shows a simplified cross-sectional sketch of basic principles of an additive manufacturing process.
Figure 2 indicates basic principles of the inventive method by way of a schematic flow chart.
Figure 3 indicates in a simplified perspective sketch the identification of voxel units indicating structure critical incidents during a layerwise additive manufacturing process.
Figure 4 indicates a simplified schematic data structure or data correlation according to aspects of the present invention.
Figure 5 schematically indicates a peer-to-peer network via which the inventive data structure may be edited or related transactions made.

Like elements, elements of the same kind and identically acting elements may be provided with the same reference numerals in the figures. The figures are not necessarily depicted true to scale and may be scaled up or down to allow for a better understanding of the illustrated principles. Rather, the described Figures are to be construed in a broad sense and as a qualitative base which allows a person skilled in the art to apply the presented teaching in a versatile way.

The term "and/or" as used herein shall mean that each of the listed elements may be taken alone or in conjunction with two or more of further listed elements.

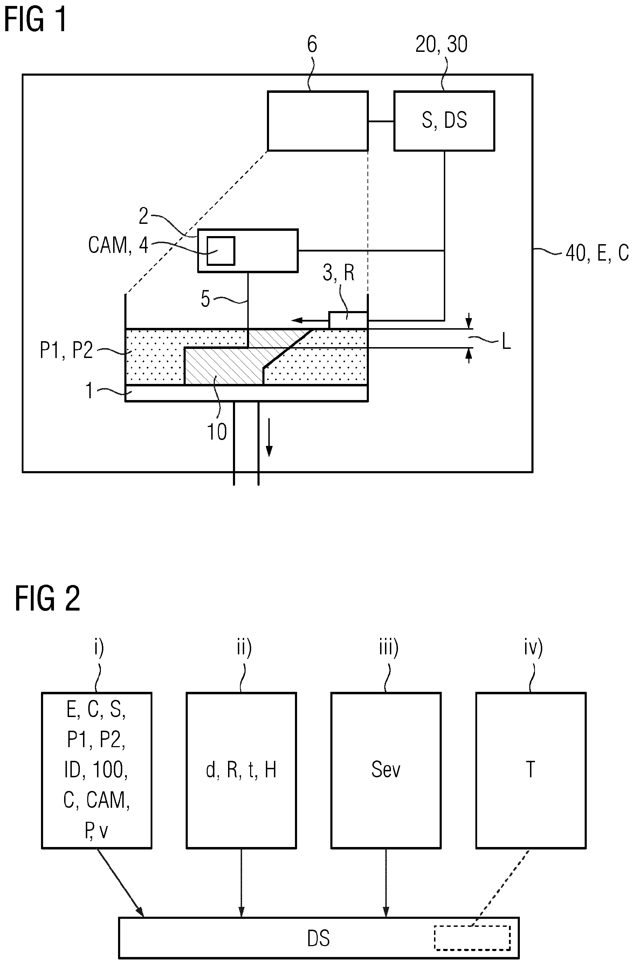

Figure 1 shows an additive manufacturing device 40. The device 40 may in parts be a conventional device for manufacturing any type of components by powder-bed-fusion. Such techniques employ a bed of a powder or base material (cf. numerals P1 and P2) which is selectively exposed to or irradiated by an energy beam 5, such as a laser or an electron beam of an irradiation apparatus or energy beam source 2. Accordingly, the given principles may relate to selective laser sintering, selective laser melting or electron beam melting.

These processes allow to establish a workpiece or component 10 on top of a build platform 1 in that powdery layers L for the part 10 are fused or welded onto said platform 1 and consecutively irradiated and selectively solidified by the beam 5 according to its predefined (CAD-)geometry. After the irradiation or fusing of each layer, the build platform 1 is usually lowered according to the layer thickness and a new base material layer deposited on a manufacturing plane by a recoater or recoating device 3. The irradiation apparatus 20 is connected to or may be controlled by a control device 4, e.g. comprising a build processor or similar means.

In the alternative the related additive manufacturing printer or machine may be based on any other "additive" principle.

The device 40 preferably further features a monitoring system or module 6, such as a photographic or optical tomography system, e.g. comprising a CCD or sCMOS camera or any other photodiode type imaging system with which layerwise images can be taken during the build job, such as one image after each powder recoating step and one image after a related (selective) laser scanning step.

There is particularly a demand and as well an ongoing research on technically efficient quality judgement solutions which are able to detect and allocate quality-relevant values and issues during the additive printing process, such as by comparing and as-deposited powder surface with an ideally (perfectly) prepared powder layer. The larger the deviation of the actual layer or layer record is - as compared to the idealised reference - the larger a deviation or severity score (cf. reference numeral Sev below) is assessed and allocated to any given layer L. These monitoring approaches further feature generating a trusted standard and certification for the monitoring process, such as by secured data handling of the sensors via by secured blockchain or comparable algorithms.

As will be described further below, the device 40 may be equipped with an apparatus 20 and a communication apparatus 30 which both are subject to the present invention.

Figure 2 shows a schematic flow chart of basic method steps of the present invention, said method being a computer-implemented method of providing structured data DS of an additive manufacturing process.

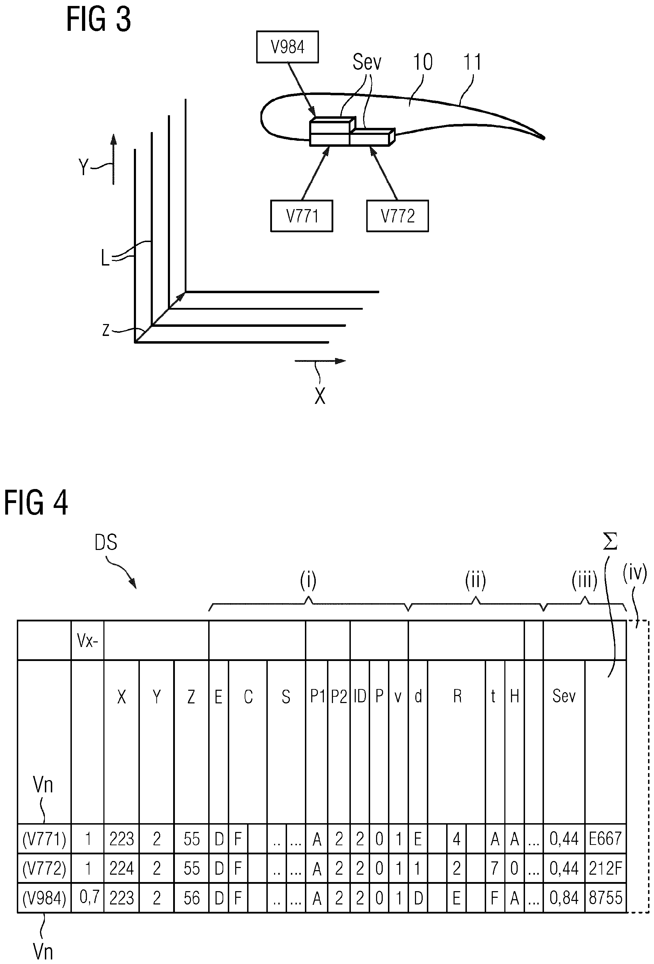

The method comprises providing a first type of data (i) with coded, such as numerically coded or character coded (cf. line content in the table of Figure 4 below), information about a machine set up and/or about a prepared build job. The first type of data (i) comprises e.g. information about the type of the printing machine, which is summarised by the parameter E in the flowchart. Moreover, the first type of data (i) relates to a calibration state C of the machine, optionally a build job identification ID and sensor (calibration) settings S, base material used (cf. numerals P1 and P2 standing for a powder composition and a batch of the base material powder, respectively) and/or machine controls (cf. numeral CAM in Fig. 1) of the build job. The machine controls may in turn comprise irradiation parameters, like a beam power P and a beam travel speed v of the build job.

The method further comprises establishing or providing a second type of data (ii) with coded information about a build area, i.e., for instance, information about target layer properties of the component 10 and a related irradiation or hatching pattern H of the build job. The mentioned target layer properties may be or comprise e.g. the recoater status indication R, a wall thickness d, i.e. preferably an X,Y-extension of a filigree portions of the component 10, and any hold or interpass timing parameter t.

As can be seen in more detail in Figure 4 and the table described below, the irradiation pattern H may comprise further geometric information of the scanning pattern like hatching distance, i.e. distance of adjacent scanning lines, beam offset or scanning vector lengths. As well the build area - or as the case may be - the layer properties shall further include information about a nature of the related layer in the stack of layers (cf. Figure 3 below), particularly if the layer e.g. pertains to a so-called upskin or downskin geometry.

The method further comprises providing a third type of data (iii) with coded information about a quality monitor for the manufacturing process, with which it is referred to the above description of the process via the monitoring module 6. To this effect, the third type of data (iii) is preferably monitoring data (to be) recorded during the manufacturing process and comprising information about a severity score Sev for assessing a severity of a detected incident and indicating such score when a predefined severity threshold is exceeded. As mentioned above the severity relates preferably to a recoating flaw and/or a defect in the as-manufactured structure of the component 10.

Finally, the method comprises mapping the first, the second and the third type of data to a voxel field Vn, wherein each voxel Vi of the field, representing a three-dimensional portion of a 3D-model of the component 10 (cf. Figure 3 below), is correlated to the first, the second and the third type of data.

Figure 3 shows a sketch of a simplified layer stack in a perspective view. The uppermost layer L of the stack includes further details of the geometry of the component 10, its contour 11 and monitored incidents during the process.

For the sake of a better overview, first and second type of data are not indicated in Figure 3. Instead, the sketch rather focuses on the inventive mapping of the third type severity score data to the voxel field as represented in Figure 3 only by voxel's V771, V772 and V984. It is emphasised that the numeration of these voxel's is just an example of linked volumetric elements in the recorded monitoring data, wherein only these critical or relevant ones voxels were permanently mapped to the data structure DS.

In other words, the voxel field's data structure preferably only retains picture or data excerpts with quality relevant findings, i.e. with monitored and critically adjudged incidents or defects above a severity threshold.

On the other hand, the remainder of non-structure-critical voxels may e.g. be discarded from the data structure DS. To this effect, a spatial map of voxels as shown in the uppermost layer of Figure 3, maybe incomplete or discontinuous.

It is further shown or shall be indicated in the sketch of Figure 3 that any voxel's Z-extension substantially corresponds to the layer thickness L chosen for the build job.

The presented method may, thus, be a method of generating a digital map of the additive manufacturing process including all quality-relevant information of the additive manufacturing process. Said method and data structure DS may thus pertain to a true digital twin of the related manufacturing process.

In a particular embodiment the provided data structure product DS is free of photographic data and complete contour data of the component 10. This embodiment helps to ease data management as regards critical and confidential information of the contour of the component as well as other restrictions, such as export control issues for communicated or transferred photographic data into a peer network.

Figure 4 further exemplifies a basic imagination of a possible data format of the structure DS. As shown, a matrix-like format would e.g. allow to correlate the mentioned types of information to the voxel field Vn which is shown as lines in the table. Mapped to a given voxel number, one can see the numerical codes for the different entities and parameters as mentioned above (cf. D, F, A, 2, 0, 1 etc.). As well it is indicated to which type of data the relevant parameters entities belong. The indicated voxel numbers particularly match to those as indicated in the sketch of Figure 3. On the right, belonging to the third type of data (iii), a sum of all detected incident and derivations can as well be part of the data structure.

At all, the number of quality-relevant process parameters of the related additive manufacturing processes, may easily exceed the number of 100. To this effect, it would also be undue in the context of the present invention to denote all relevant parameters exhaustively. Further quantities, not mentioned so far may as well be part of the data structure, be it in the first, the second or the third fraction of data. Such parameters may relate to a melt pool geometry which may e.g., be part of the third type (iii), a heat impact per volume or area unit, a laser wavelength, beam angle, type of purge gas, flow rate of purge gas, flow rate of possible exhaustion gas, states of gas valves, set ambient pressure, or others.

The following table summarises with more detail and examples the presented data correlate.

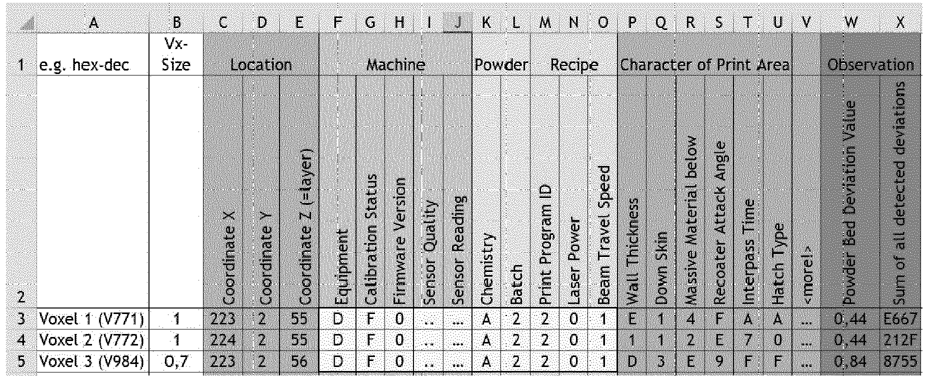

This format may e.g. be or be part of a database which is designed in order to enable a community of peers and additive manufacturing stakeholders to exchange information about a print process and gain better understanding of the technical cause of defects in the process.

Thus, the presented data structure DS may be a tree- or matrix-like logical structure, whereas the electronic data format may of course be any format that is suitable to represent the data structure in an expedient way.

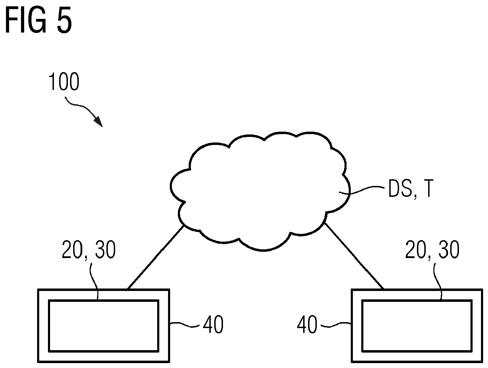

As will be further detailed out in Figure 5 below, the present invention as well relates to a communication interface to a network application, such as a distributed peer-to-peer network 100, with which information between peers and additive manufacturing users or operators can send to and receive information from the network 100. Particularly, as is shown by the dashed column on the very right in Figure 4, the interface shall be configured to e.g. read the structured information of the data structure product DS such that a measure for preventing a detected incident can be defined, and such that the data structure DS can be extended or edited, by a fourth type of data (iv), indicating such measure in the data structure product DS, preferably in a compatible, secured or tamper-proof manner.

An AM engineer may e.g., edit or extract third type of data from the data structure DS and communicate out a query to a connected community, whether there is other experience of this particular print characteristics or defect and a solution to repair such detected issue. This information for a solving the technical issue may be based on the correlated voxel only, preferably irrespective of the component's overall design. Likewise, the query may be responded by a peer in the community over the same communication interface (see below). If, on the contrary, no useful information can be extracted from the underlying process, then the related print characteristics of the data structure DS may be discarded or put into an "observation bucket" for future (automated) of or repetition of exchange.

Figure 5 shows a simplified sketch indicating the functionality of the described communication of the data structure to and out of the network 100 which may preferably be a wireless and distributed network 100, containing the data structure as the result of the present invention. Numeral T shall indicate a transaction that can be made by an additive manufacturing device 40 to said network 100 or via said network 100 to another device 40. To this effect, the device is preferably equipped with an apparatus 20 that serves the purpose of providing the data structure, such as via a specific module for establishing the first type of data, the second type of data and the third type of data and a mapping module for correlating said types of data to the voxel field Vn as described. As indicated by numeral 30, said device may as well feature a communication apparatus that is configured for the above-described communication functionality of reading and extending the data structure product DS.

Even though said apparatuses 20 and 30 may as well exist separate from a 3D printer 40, it would be expedient to have the apparatus 20 set up to communicate with a monitoring module 6 of the device 40 to establish at least the third type of data.

The described (peer-to-peer) network 100 may (other than depicted in Figure 5) comprise a plurality of ledgers each of which being or being accessible by a printing device 40 or by the described communication apparatus 30, wherein the transactions T with the data structure DS can be carried out in a secured manner.

## Claims

1. A computer-implemented method of providing structured data (DS) of an additive manufacturing process, the method comprising:
- providing a first type of data (i) with coded information about a machine set up and/or about a prepared build job,
- providing a second type of data (ii) with coded information about a build area,
- providing a third type of data (iii) with coded information about a quality monitoring during the manufacturing process, the information from the first, the second and the third type of data being different from one another, and
- mapping the first, the second and the third type of data to a voxel field (Vn), wherein each voxel of the field, representing a three-dimensional portion of a 3D-model of the component (10) to be manufactured, is correlated to the first, the second and the third type of data in a coded way.

2. The method according to claim 1, wherein the first type of data (i) comprises information about the type of the printing machine, its calibration (C), sensor settings (S), base material used and/or machine controls (CAM) of the build job.

3. The method according to claim 1 or 2, wherein the first type of data (i) comprises information about a composition (P1) and/or a batch (P2) of the base material and irradiation parameters, like a beam power (P) and a beam travel speed (v) of the build job.

4. The method according to one of the previous claims, wherein the second type of data (ii) comprises information about target layer properties of the component (10) and a related irradiation pattern (H) of the build job.

5. The method according to one of the previous claims, wherein the third type of data (iii) is monitoring data recorded during the manufacturing process comprising information about a severity score (Sev) for assessing a severity of a detected incident and indicating such score when a predefined severity threshold is exceeded.

6. The method according to claim 5, wherein the severity relates to a recoating flaw and/or a defect in the as-manufactured structure of the component (10).

7. The method according to one of the previous claims, wherein only structure-critical voxels are permanently linked to the data structure (DS).

8. The method according to claim 7, wherein the remainder of non-structure-critical voxels is discarded from the data structure (DS) such that a spatial map of voxels may be discontinuous.

9. The method according to one of the previous claims, wherein a voxel's Z-extension (Z) substantially corresponds to the layer thickness (L) of a raw material layer which is respectively chosen for the build job.

10. The method according to one of the previous claims, being a method of generating a digital map (DS) of the additive manufacturing process including all quality-relevant information of the additive manufacturing process.

11. A data structure product (DS) comprising the structured data provided by one of the previous claims.

12. The data structure product (DS) according to claim 11, which is free of photographic data and complete contour data of the component (10).

13. An apparatus (20) for providing the data structure product (DS) according to claims 11 or 12, wherein the apparatus (20) comprises a module for establishing the first type of data, the second type of data and the third type of data and a mapping module for correlating said types of data to the voxel field.

14. A communication apparatus (30) comprising a communication interface to a network application, such as a distributed peer-to-peer network, wherein the interface is configured to send to and receive information from the network, and wherein the communication interface is configured:
- to read the structured information of the data structure product according to claims 11 or 12 such that a measure for preventing a detected incident can be defined, and
- to extend the data structure (DS) with a fourth type of data (iv), indicating such measure in the data structure product (DS) in a compatible and secure manner.

15. Additive manufacturing device (40), particularly a 3D-printer, comprising a monitoring module (6) for detecting defects during an additive manufacturing process, and the communication apparatus (30) according to claim 14, and/or the apparatus (20) for providing the data structure product according to claim 13, wherein the apparatus (20) is further set up to communicate with the monitoring module in order to establish the third type of data (iii).
